(19) Europäisches Patentamt
European Patent Office
Office européen des brevets

(11) **EP 4 068 769 A1**

(12) **EUROPEAN PATENT APPLICATION**
published in accordance with Art. 153(4) EPC

(43) Date of publication:
**05.10.2022 Bulletin 2022/40**

(21) Application number: **20895782.9**

(22) Date of filing: **02.12.2020**

(51) International Patent Classification (IPC):
**H04N 13/302** (2018.01)   **H04N 13/383** (2018.01)
**H04N 13/257** (2018.01)   **H04N 13/246** (2018.01)

(52) Cooperative Patent Classification (CPC):
**H04N 13/111; H04N 13/246; H04N 13/257;
H04N 13/302; H04N 13/383**

(86) International application number:
**PCT/CN2020/133328**

(87) International publication number:
**WO 2021/110034 (10.06.2021 Gazette 2021/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.12.2019 CN 201911231206**

(71) Applicants:
• **Beijing Ivisual 3D Technology Co., Ltd.
Beijing 100055 (CN)**
• **Visiotech Ventures Pte. Ltd.
Singapore 188979 (SG)**

(72) Inventors:
• **DIAO, Honghao
Beijing 100055 (CN)**
• **HUANG, Lingxi
Singapore 188979 (SG)**

(74) Representative: **Manitz Finsterwald
Patent- und Rechtsanwaltspartnerschaft mbB
Martin-Greif-Strasse 1
80336 München (DE)**

(54) **EYE POSITIONING DEVICE AND METHOD, AND 3D DISPLAY DEVICE AND METHOD**

(57)    The present application relates to a 3D display technology, and discloses an eye positioning apparatus, comprising: an eye positioner, comprising a first black-and-white camera configured to shoot first black-and-white images and a second black-and-white camera configured to shoot second black-and-white images; and an eye positioning image processor, configured to identify presence of eyes based on at least one of the first black-and-white images and the second black-and-white images and determine eye space positions based on the eyes identified in the first black-and-white images and the second black-and-white images. The apparatus can determine the eye space positions of a user at high accuracy, thereby improving 3D display quality. The present application further discloses an eye positioning method, a 3D display device and method, a computer-readable storage medium, and a computer program product.

<u>150</u>

| Eye positioner 151 | |
|---|---|
| First black-and-white camera 151a | Second black-and-white camera 151b |

| Eye positioning image processor 152 |
|---|

Fig. 1C

Processed by Luminess, 75001 PARIS (FR)

**Description**

The present application claims priority to the Chinese Patent Application with an application number of 2019112312064 and a title of "Eye Tracking Apparatus and Method, and 3D Display Device and Method", filed to China National Intellectual Property Administration on December 5th, 2019, the disclosures of which are hereby incorporated by reference.

TECHNICAL FIELD

The present application relates to a 3D display technology, and for example, relates to an eye positioning apparatus and method, and a 3D display device and method.

BACKGROUND

In some conventional face or eye positioning apparatuses, only a distance between a face and a screen is detected; and positions of viewpoints, at which eyes are located, are determined by a preset or default pupil distance. Thus, the recognition accuracy is not high; a viewpoint calculation error may be caused; and high-quality 3D display cannot be satisfied.

The present background is only for the convenience of understanding the related technologies in the field, and is not regarded as an admission of the existing technologies.

SUMMARY

In order to provide a basic understanding of some aspects of the disclosed embodiments, a brief summary is given below. The summary is not intended to identify key/important components or describe the scope of protection of the present disclosure, but to be a preface to the following detailed description.

Embodiments of the present application are intended to provide an eye positioning apparatus and method, a 3D display device and method, a computer-readable storage medium, and a computer program product.

In one solution, an eye positioning apparatus is provided, comprising: an eye positioner, comprising a first black-and-white camera configured to shoot first black-and-white images and a second black-and-white camera configured to shoot second black-and-white images; and an eye positioning image processor, configured to identify the presence of eyes based on at least one of the first black-and-white images and the second black-and-white images and determine eye space positions based on the eyes identified in the first black-and-white images and the second black-and-white images.

By adopting the eye positioning apparatus, the eye space positions of the user can be determined at high accuracy, to improve 3D display quality.

In some embodiments, the eye positioning apparatus further comprises an eye positioning data interface, configured to transmit eye space position information which indicates the eye space positions.

In some embodiments, the eye positioner further comprises an infrared emitting apparatus.

In some embodiments, the infrared emitting apparatus is configured to emit infrared light with a wavelength greater than or equal to 1.5 microns.

In some embodiments, the first black-and-white camera and the second black-and-white camera are configured to respectively shoot a first black-and-white image sequence comprising the first black-and-white images and a second black-and-white image sequence comprising the second black-and-white images.

In some embodiments, the eye positioning image processor comprises a synchronizer, configured to determine time-synchronized first black-and-white images and second black-and-white images, so as to conduct identification of eyes and determination of the eye space positions.

In some embodiments, the eye positioning image processor comprises: a buffer, configured to buffer a plurality of first black-and-white images and second black-and-white images in the first black-and-white image sequence and the second black-and-white image sequence; a comparer, configured to compare a plurality of previous or subsequent first black-and-white images and second black-and-white images in the first black-and-white image sequence and the second black-and-white image sequence; and a determiner, wherein when the comparer does not identify the presence of eyes in a current first black-and-white image and a current second black-and-white image in the first black-and-white image sequence and the second black-and-white image sequence and identifies the presence of eyes in a previous or subsequent first black-and-white image and second black-and-white image through comparison, the determiner is configured to take the eye space positions, determined based on the previous or subsequent first black-and-white image and second black-and-white image, as current eye space positions.

Based on this, for example, in the case of stalling or frame skipping of the first or second black-and-white camera, a more coherent display picture can be provided for the user, to ensure viewing experience.

In another solution, a 3D display device is provided, comprising: a multi-viewpoint 3D display screen, comprising a plurality of subpixels corresponding to a plurality of viewpoints; the eye positioning apparatus as described above, configured to obtain the eye space positions; and a 3D processing apparatus, configured to determine corresponding viewpoints according to the eye space positions acquired by the eye positioning apparatus, and render the subpixels, corresponding to the viewpoints, of the multi-viewpoint 3D display screen based on 3D signals.

In some embodiments, the multi-viewpoint 3D display screen comprises a plurality of composite pixels; each composite pixel of the plurality of composite pixels comprises a plurality of composite subpixels; and each composite subpixel of the plurality of composite subpixels comprises a plurality of subpixels corresponding to the plurality of viewpoints.

In some embodiments, the 3D processing apparatus is in communication connection with the eye positioning apparatus.

In some embodiments, the 3D display device further comprises: a 3D shooting apparatus, configured to collect 3D images; and the 3D shooting apparatus comprises a depth-of-field (DOF) camera and at least two color cameras.

In some embodiments, the eye positioning apparatus is integrated with the 3D shooting apparatus.

In some embodiments, the 3D shooting apparatus is placed in front of the 3D display device.

In another solution, an eye positioning method is provided, comprising: shooting first black-and-white images and second black-and-white images; identifying the presence of eyes based on at least one of the first black-and-white images and the second black-and-white images; and determining eye space positions based on the eyes identified in the first black-and-white images and the second black-and-white images.

In some embodiments, the eye positioning method further comprises: transmitting eye space position information which indicates the eye space positions.

In some embodiments, the eye positioning method further comprises: emitting infrared light by utilizing an infrared emitting apparatus, when the first black-and-white camera or the second black-and-white camera works.

In some embodiments, the eye positioning method further comprises: shooting a first black-and-white image sequence comprising the first black-and-white images and a second black-and-white image sequence comprising the second black-and-white images respectively.

In some embodiments, the eye positioning method further comprises: determining time-synchronized first black-and-white images and second black-and-white images.

In some embodiments, the eye positioning method further comprises: buffering a plurality of first black-and-white images and second black-and-white images in the first black-and-white image sequence and the second black-and-white image sequence; comparing a plurality of previous or subsequent first black-and-white images and second black-and-white images in the first black-and-white image sequence and the second black-and-white image sequence; and taking, when the presence of eyes is not identified in a current first black-and-white image and a current second black-and-white image in the first black-and-white image sequence and the second black-and-white image sequence and the presence of eyes is identified in a previous or subsequent first black-and-white image and second black-and-white image through comparison, the eye space positions determined based on the previous or subsequent first black-and-white image and second black-and-white image as current eye space positions.

In another solution, a 3D display method is provided, comprising: acquiring eye space positions of a user; determining corresponding viewpoints according to the eye space positions; and rendering subpixels, corresponding to the viewpoints, of a multi-viewpoint 3D display screen based on 3D signals.

In some embodiments, the 3D display method further comprises: providing the multi-viewpoint 3D display screen, which comprises a plurality of composite pixels, wherein each composite pixel of the plurality of composite pixels comprises a plurality of composite subpixels; and each composite subpixel of the plurality of composite subpixels comprises a plurality of subpixels corresponding to the plurality of viewpoints.

The computer-readable storage medium provided by the embodiments of the present disclosure stores computer-executable instructions; and the computer-executable instructions are configured to execute the eye positioning method and the 3D display method.

The computer program product provided by the embodiments of the present disclosure comprises computer programs stored on a computer-readable storage medium; the computer programs comprise program instructions; and when the program instructions are executed by a computer, the computer executes the eye positioning method and the 3D display method.

The above general description and the following description are exemplary and explanatory only, and are not intended to limit the present application.

DESCRIPTION OF DRAWINGS

One or more embodiments are illustrated by the corresponding drawings, and the illustrations and drawings do not limit the embodiments. Elements having the same reference numerals in the drawings are shown as similar elements, and the drawings are not intended to limit the scale, wherein:

Figs. 1A and 1B are structural schematic diagrams of a 3D display device according to embodiments of the present disclosure;
Fig. 1C is a structural schematic diagram of an eye positioning apparatus according to an embodiment of the present disclosure;
Fig. 2 is a structural schematic diagram of hardware of a 3D display device according to an embodiment of the present disclosure;
Fig. 3 is a structural schematic diagram of software of the 3D display device shown in Fig. 2;
Fig. 4 is a schematic diagram of determining eye space positions by utilizing an eye positioning apparatus according to an embodiment of the present disclosure;

Figs. 5A to 5C are front schematic diagrams of a 3D display device according to embodiments of the present disclosure;

Figs. 6A and 6B are schematic diagrams of positional relationship between a face of a user and a 3D display device according to embodiments of the present disclosure;

Fig. 7 is a schematic diagram of steps of an eye positioning method according to an embodiment of the present disclosure;

Fig. 8 is a schematic diagram of steps of a 3D display method according to an embodiment of the present disclosure; and

Fig. 9 is a schematic diagram of realizing the display of a multi-viewpoint 3D display screen of a 3D display device with a 3D display method according to an embodiment of the present disclosure, wherein each eye of a user corresponds to one viewpoint.

Reference numerals:

100: 3D display device; 101: processor; 122: register; 110: multi-viewpoint 3D display screen; 120: 3D shooting apparatus; 121: camera assembly; 121a: first color camera; 121b: second color camera; 121c: DOF camera; 125: 3D image output interface; 126: 3D image processor; 130: 3D processing apparatus; 131: buffer; 140: signal interface; 150: eye positioning apparatus; 151: eye positioner; 151a: first black-and-white camera; 151b: second black-and-white camera; 154: infrared emitting apparatus; 152: eye positioning image processor; 155: synchronizer; 156: buffer; 157: comparer; 153: eye positioning data interface; CP: composite pixel; CSP: composite subpixel; 200: 3D display device; 201: processor; 202: external memory interface; 203: memory; 204: universal serial bus (USB) interface; 205: charging management module; 206: power management module; 207: battery; 210: multi-viewpoint 3D display screen; 212: audio module; 213: loudspeaker; 214: phone receiver; 215: microphone; 216: earphone interface; 217: button; 218: motor; 219: indicator; 220: 3D shooting apparatus; 221: camera assembly; 222: register; 223: graphics processing unit (GPU); 224: codec; 225: 3D image output interface; 226: 3D image processor; 230: 3D processing apparatus; 240: signal interface; 250: eye positioning apparatus; 260: subscriber identity module (SIM) card interface; 270: sensor module; 2701: proximity light sensor; 2702: ambient light sensor; 2703: pressure sensor; 2704: air pressure sensor; 2705: magnetic sensor; 2706: gravity sensor; 2707: gyro sensor; 2708: acceleration sensor; 2709: distance sensor; 2710: temperature sensor; 2711: fingerprint sensor; 2712: touch sensor; 2713: bone conduction sensor; 281: mobile communication module; 282: antenna; 283: wireless communication module; 284: antenna; 310: application program layer; 320: framework layer; 330: core class library and runtime; 340: kernel layer; T: distance between two black-and-white cameras; 401a: focal plane of the first black-and-white camera 151a; 401b: focal plane of the second black-and-white camera 151b; f: focal length; Oa: lens center of the first black-and-white camera 151a; Ob: lens center of the second black-and-white camera 151b; Za: optical axis of the first black-and-white camera 151a; Zb: optical axis of the second black-and-white camera 151b; R: right eye of the user; L: left eye of the user; P: pupil distance of the user; $\alpha$: tilt angle of the face of the user relative to the multi-viewpoint 3D display screen; XRa: X-axis coordinate of imaging of the right eye of the user R in the focal plane 401a of the first black-and-white camera 151a; XRb: X-axis coordinate of imaging of the right eye of the user R in the focal plane 401b of the second black-and-white camera 151b; XLa: X-axis coordinate of imaging of the left eye of the user L in the focal plane 401a of the first black-and-white camera 151a; XLb: X-axis coordinate of imaging of the left eye of the user L in the focal plane 401b of the second black-and-white camera 151b; DR: distance between the right eye of the user R and the multi-viewpoint 3D display screen; DL: distance between the left eye of the user L and the multi-viewpoint 3D display screen; 500: 3D display device; and 600: 3D display device.

DETAILED DESCRIPTION

For more detailed understanding of characteristics and technical contents of embodiments of the present disclosure, the implementation of the embodiments of the present disclosure will be described in detail below with reference to the accompanying drawings, and the accompanying drawings are used for reference only, instead of limiting the embodiments of the present disclosure.

In one solution, an eye positioning apparatus is provided, comprising: an eye positioner, comprising a first black-and-white camera configured to shoot first black-and-white images and a second black-and-white camera configured to shoot second black-and-white images; an eye positioning image processor, configured to identify the presence of eyes based on at least one of the first black-and-white images and the second black-and-white images and determine eye space positions based on positions of the eyes present in the first black-and-white images and the second black-and-white images; and an eye positioning data interface, configured to transmit eye space information of the eye space positions.

By adopting the eye positioning apparatus, the eye space positions of the user can be determined at high accuracy.

In some embodiments, the eye positioner further comprises an infrared emitting apparatus.

In some embodiments, the infrared emitting apparatus is configured to emit infrared light with a wavelength greater than or equal to 1.5 microns.

In some embodiments, the first black-and-white camera and the second black-and-white camera are configured to respectively shoot a first black-and-white image sequence and a second black-and-white image sequence.

In some embodiments, the eye positioning image processor comprises a synchronizer, configured to determine time-synchronized first black-and-white images and second black-and-white images.

In some embodiments, the eye positioning image processor comprises: a buffer, configured to buffer a plurality of first black-and-white images and second black-and-white images in the first black-and-white image sequence and the second black-and-white image sequence; and a comparer, configured to compare a plurality of previous or subsequent first black-and-white images and second black-and-white images in the first black-and-white image sequence and the second black-and-white image sequence.

In some embodiments, when the presence of eyes is not identified in a current first black-and-white image and a current second black-and-white image in the first black-and-white image sequence and the second black-and-white image sequence and the presence of eyes is identified in a previous or subsequent first black-and-white image and second black-and-white image, the eye positioning image processor is configured to take eye space position information, determined based on the previous or subsequent first black-and-white image and second black-and-white image, as current eye space position information.

Based on this, for example, in the case of stalling or frame skipping of the first or second black-and-white camera, a more coherent display picture can be provided for the user, to ensure the viewing experience.

In some embodiments, the first black-and-white camera and the second black-and-white camera are configured to shoot the first black-and-white image sequence and the second black-and-white image sequence at a frequency of 24 fps or more.

In another solution, a 3D display device is provided, comprising: a multi-viewpoint 3D display screen (such as a multi-viewpoint naked-eye 3D display screen), a video signal interface (signal interface) configured to receive video frames of 3D video signals (3D signals), a 3D processing apparatus in communication connection with the video signal interface, and an eye positioning apparatus as described above; the multi-viewpoint 3D display screen comprises a plurality of subpixels corresponding to a plurality of viewpoints; the 3D processing apparatus is configured to render subpixels relevant to predetermined viewpoints based on the video frames of the 3D video signals; and the predetermined viewpoints are determined by the eye space position information of the user.

In some embodiments, the multi-viewpoint 3D display screen comprises a plurality of composite pixels; each composite pixel of the plurality of composite pixels comprises a plurality of composite subpixels; and each composite subpixel comprises a plurality of homochromatic subpixels corresponding to the plurality of viewpoints.

In some embodiments, the 3D processing apparatus is in communication connection with an eye positioning data interface of the eye positioning apparatus.

In some embodiments, the 3D display device further comprises a 3D shooting apparatus configured to collect 3D images; the 3D shooting apparatus comprises a camera assembly and a 3D image processor; and the camera assembly comprises a first color camera, a second color camera, and a DOF camera.

In some embodiments, the eye positioning apparatus is integrated with the 3D shooting apparatus.

In some embodiments, the 3D shooting apparatus is a front-mounted shooting apparatus.

In another solution, an eye positioning method is provided, comprising: shooting first black-and-white images at a first position; shooting second black-and-white images at a second position, wherein the second position is different from the first position; identifying the presence of eyes based on at least one of the first black-and-white images and the second black-and-white images; determining eye space positions based on positions of the eyes present in the first black-and-white images and the second black-and-white images; and transmitting eye space position information of the eye space positions.

In some embodiments, the eye positioning method further comprises: emitting infrared light by utilizing an infrared emitting apparatus, when the first black-and-white camera or the second black-and-white camera works.

In some embodiments, the eye positioning method further comprises: shooting a first black-and-white image sequence and a second black-and-white image sequence respectively.

In some embodiments, the eye positioning method further comprises: determining time-synchronized first black-and-white images and second black-and-white images.

In some embodiments, the eye positioning method further comprises: buffering a plurality of first black-and-white images and second black-and-white images in the first black-and-white image sequence and the second black-and-white image sequence; and comparing a plurality of previous or subsequent first black-and-white images and second black-and-white images in the first black-and-white image sequence and the second black-and-white image sequence.

In some embodiments, the eye positioning method further comprises: taking, when the presence of eyes is not identified in a current first black-and-white image and a current second black-and-white image in the first black-and-white image sequence and the second black-and-white image sequence and the presence of eyes is identified in a previous or subsequent first black-and-white image and second black-and-white image, eye space position information determined based on the previous or subsequent first black-and-white image and second black-and-white image as current eye space position information.

In some embodiments, the eye positioning method further comprises: shooting a first black-and-white image sequence and a second black-and-white image sequence at a frequency of 24 fps or more.

In another solution, a 3D display method is provided, which is suitable for a 3D display device. The 3D display device comprises a multi-viewpoint 3D display screen, comprising a plurality of subpixels corresponding to a plurality of viewpoints; and the 3D display method comprises: transmitting video frames of 3D video signals; receiving or reading eye space position information of the user, wherein the eye space position information is determined by the above eye positioning method; determining viewpoints, at which the eyes are located, based on the eye space position information; and rendering relevant subpixels according to the received video frames of the 3D video signals, based on the viewpoints.

In some embodiments, the 3D display method further comprises: providing the multi-viewpoint display screen, which comprises a plurality of composite pixels, wherein each composite pixel of the plurality of composite pixels comprises a plurality of composite subpixels; and each composite subpixel comprises a plurality of homochromatic subpixels corresponding to a plurality of viewpoints.

In another solution, a 3D display device is provided, comprising a processor and a memory storing program instructions, and further comprising a multi-viewpoint 3D display screen, wherein the processor is configured to execute the above 3D display method when executing the program instructions.

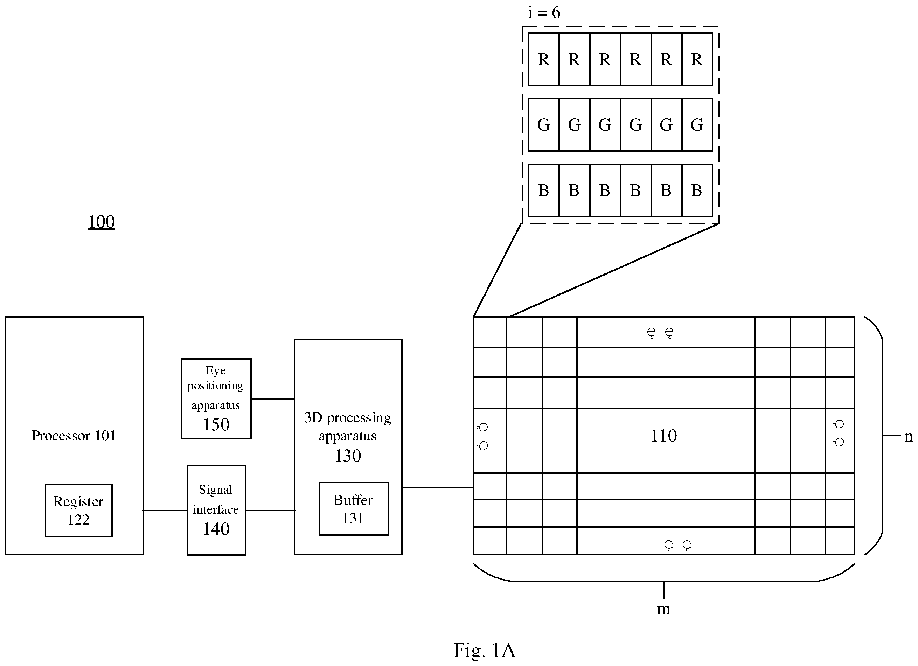

Fig. 1A shows a structural schematic diagram of a 3D display device 100 according to an embodiment of the present disclosure. Referring to Fig. 1A, an embodiment of the present disclosure provides the 3D display device 100, which comprises a multi-viewpoint 3D display screen 110, a signal interface 140 configured to receive video frames of 3D video signals, a 3D processing apparatus 130 in communication connection with the signal interface 140, and an eye positioning apparatus 150. The eye positioning apparatus 150 is in communication connection to the 3D processing apparatus 130, so that the 3D processing apparatus 130 may directly receive eye positioning data.

The multi-viewpoint 3D display screen 110 may comprise a display panel and gratings (not shown) covering the display panel. In an embodiment shown in Fig. 1A, the multi-viewpoint 3D display screen 110 may comprise m×n composite pixels CP and thus define a display resolution of m×n. In an embodiment shown in Fig. 1A, the multi-viewpoint 3D display screen 110 may comprise m columns and n rows of composite pixels and thus define a display resolution of m×n.

In some embodiments, the resolution of m×n may be higher than full high definition (FHD), comprising but not limited to 1920×1080, 1920×1200, 2048×1280, 2560x1440, 3840×2160 and the like.

In some embodiments, the 3D processing apparatus is in communication connection with the multi-viewpoint 3D display screen.

In some embodiments, the 3D processing apparatus is in communication connection with a driving apparatus of the multi-viewpoint 3D display screen.

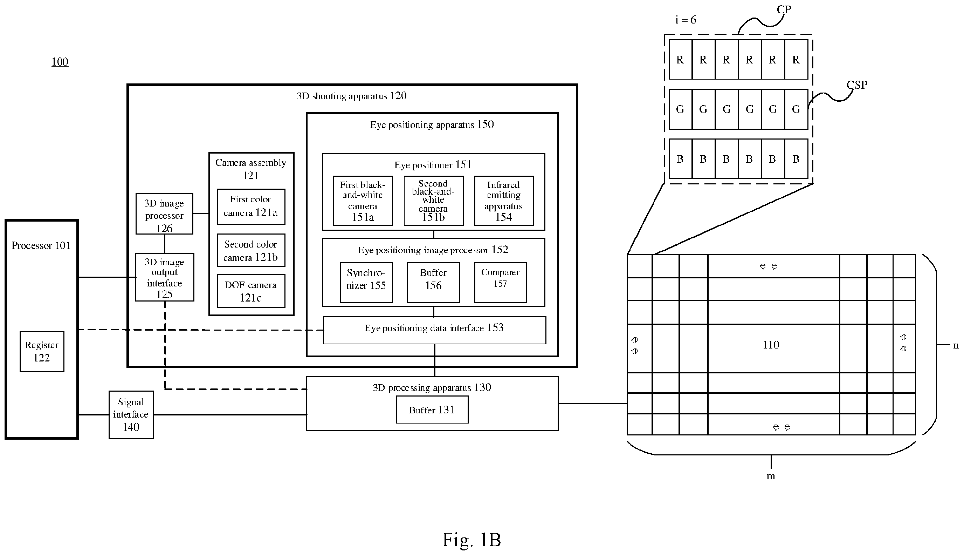

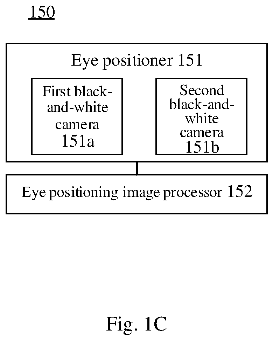

By way of explanation but not limitation, each composite pixel CP comprises a plurality of composite subpixels CSP; each composite subpixel comprises i homochromatic subpixels corresponding to i viewpoints; and i>3. In the embodiments shown in Fig. 1, i=6; but conceivably, i may be other values. In the illustrated embodiments, the multi-viewpoint 3D display screen may have i (i=6) viewpoints (V1-V6) correspondingly, but conceivably may have more or fewer viewpoints correspondingly.

By way of explanation but not limitation, in the embodiments shown in Fig. 1, each composite pixel comprises three composite subpixels; and each composite subpixel comprises six homochromatic subpixels corresponding to six viewpoints (i=6). The three composite subpixels respectively correspond to three colors, i.e., red (R), green (G) and blue (B). In other words, the three composite subpixels of each composite pixel respectively have six red subpixels, six green subpixels or six blue subpixels. In the embodiments shown in Fig. 1, all composite subpixels in the composite pixels are arranged in parallel. Each composite subpixel comprises subpixels in a single row. However, different arrangements of the composite subpixels in the composite pixels or different arrangements of the subpixels in the composite subpixels are conceivable; for example, each composite subpixel comprises subpixels in a single row or an array form.

By way of explanation but not limitation, for example, as shown in Fig. 1A, the 3D display device 100 may be provided with a single 3D processing apparatus 130. The single 3D processing apparatus 130 simultaneously processes the rendering of subpixels of each composite subpixel of each composite pixel of the 3D display screen 110. In other embodiments, the 3D display device 100 may also be provided with more than one 3D processing apparatus 130, which processes the rendering of subpixels of each composite subpixel of each composite pixel of the 3D display screen 110 in parallel, series or a combination of series and parallel. Persons skilled in the field will understand that more than one 3D processing apparatus may be allocated in other ways and process multiple rows and columns of composite pixels or composite subpixels of the 3D display screen 110 in parallel, which falls within the scope of embodiments of the present disclosure.

In some embodiments, the 3D processing apparatus 130 may optionally comprise a buffer 131, to buffer the received video frames.

In some embodiments, the 3D processing apparatus is an FPGA or ASIC chip or an FPGA or ASIC chipset.

Continuing to refer to Fig. 1A, the 3D display device 100 may further comprise a processor 101 in communication connection to the 3D processing apparatus 130 through the signal interface 140. In some embodiments shown herein, the processor 101 is contained in a computer or an intelligent terminal such as a mobile terminal, or serves as a processor unit. However, conceivably, in some embodiments, the processor 101 may be arranged outside the 3D display device, for example, the 3D display device may be a multi-viewpoint 3D display with a 3D processing apparatus, such as a non-smart 3D TV.

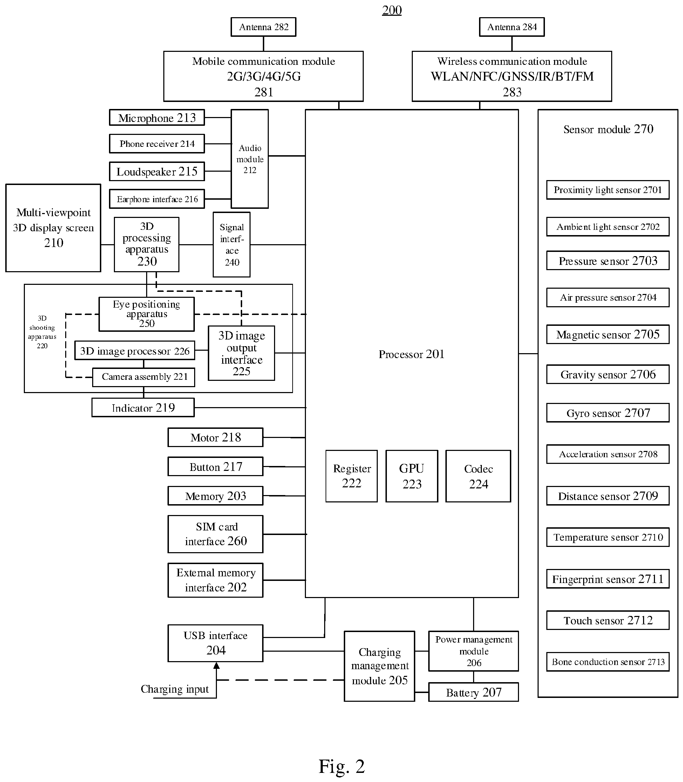

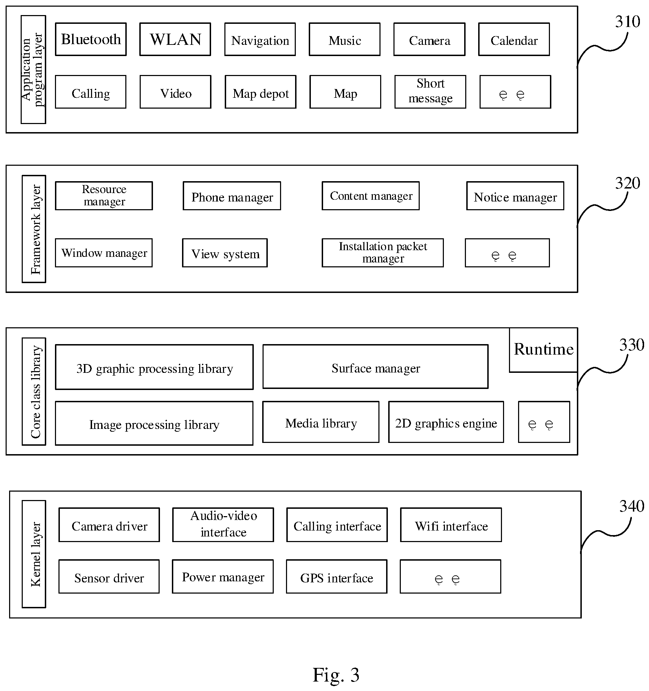

For the sake of simplicity, the following exemplary embodiment of the 3D display device internally comprises a processor. Based on this, the signal interface 140 is configured as an internal interface for connecting the processor 101 with the 3D processing apparatus 130; and the structure may be more clearly defined with reference to the 3D display device 200 implemented as a mobile terminal shown in Figs. 2 and 3. In some embodiments shown herein, the signal interface as the internal interface of the 3D display device may be a mobile industry processor interface (MIPI), a mini-MIPI, a low voltage differential signaling (LVDS) interface, a min-LVDS interface or a Display Port interface. In some embodiments, as shown in Fig. 1A, the processor 101 of the 3D display device 100 may further comprise a register 122. The register 122 may be configured to temporarily store instructionsinstructions, data and addresses. In some embodiments, the register 122 may be configured to receive information about display requirements of the multi-viewpoint 3D display screen 110.

In some embodiments, the 3D display device 100 may further comprise a codec, configured to decompress and encode compressed 3D video signals and transmit the decompressed 3D video signals to the 3D processing apparatus 130 through the signal interface 140.

Referring to Fig. 1B, an embodiment shown in Fig. 1B is different from an embodiment shown in Fig. 1A in that, the 3D display device 100 further comprises a 3D shooting apparatus 120 configured to collect 3D images, the eye positioning apparatus 150 is integrated in the 3D shooting apparatus 120 and may also be integrated into a conventional shooting apparatus of a processing terminal or a display device. As shown in Fig. 1B, the 3D shooting apparatus 120 is configured as a front-mounted shooting apparatus. The 3D shooting apparatus 120 comprises a camera assembly 121, a 3D image processor 126, and a 3D image output interface 125. The 3D shooting apparatus 120 is integrated with the eye positioning apparatus 150.

As shown in Fig. 1B, the camera assembly 121 comprises a first color camera 121a, a second color camera 121b, and a DOF camera 121c. In other embodiments not shown, the 3D image processor 126 may be integrated into the camera assembly 121. In some embodiments, the first color camera 121a is configured to acquire a first color image of a shot object, the second color camera 121b is configured to acquire a second color image of the shot object, and the two color images are composited to acquire a composite color image of a middle point; and the DOF camera 121c is configured to acquire a DOF image of the shot object. The composite color image and the DOF image form a video frame of a 3D video signal. In embodiments of the present disclosure, the first color camera and the second color camera are the same color camera. In other embodiments, the first color camera and the second color camera may be different color cameras. In this case, in order to acquire a color composite image, the first color image and the second color image may be calibrated or corrected. The DOF camera 121c may be a time-of-flight (TOF) camera or a structured light camera. The DOF camera 121c may be arranged between the first color camera and the second color camera.

In some embodiments, the 3D image processor 126 is configured to composite the first color image and the second color image into a composite color image, and form a 3D image from the composite color image and the DOF image. The formed 3D image is transmitted to the processor 101 of the 3D display device 100 through the 3D image output interface 125.

Optionally, the first color image and the second color image as well as the DOF image are directly transmitted to the processor 101 of the 3D display device 100 through the 3D image output interface 125; and the processes of compositing the color image and forming the 3D image are performed by the processor 101.

Optionally, the 3D image output interface 125 may also be in communication connection to the 3D processing apparatus 130 of the 3D display device 100, so that the processes of compositing the color image and forming the 3D image may be performed by the 3D processing apparatus 130.

In some embodiments, at least one of the first color camera and the second color camera is a wide-angle color camera.

Continuing to refer to Fig. 1B, the eye positioning apparatus 150 is integrated in the 3D shooting apparatus 120 and comprises an eye positioner 151, an eye positioning image processor 152 and an eye positioning data interface 153.

The eye positioner 151 comprises a first black-and-white camera 151a and a second black-and-white camera 151b. The first black-and-white camera 151a is configured to shoot first black-and-white images; and the second black-and-white camera 151b is configured to shoot second black-and-white images. When the 3D shooting apparatus 120 is front-mounted and the eye positioning apparatus 150 is integrated in the 3D shooting apparatus 120, the eye positioning apparatus 150 is also front-mounted, and the shot object of the first black-and-white camera and the second black-and-white camera is a face of the user.

In some embodiments, the eye positioning data interface 153 of the eye positioning apparatus 150 is in communication connection to the 3D processing apparatus 130 of the 3D display device 100, so that the 3D processing apparatus 130 may directly receive eye positioning data. In other embodiments, the eye positioning image processor 152 of the eye positioning apparatus 150 may be in communication connection to the processor 101 of the 3D display device 100, so that the eye positioning data may be transmitted from the processor 101 to the 3D processing apparatus 130 through the eye positioning data interface 153.

In some embodiments, the eye positioning apparatus 150 is in communication connection with a camera assembly 221, so that the eye positioning data may be used when the 3D images are shot.

Optionally, the eye positioner 151 is further provided with an infrared emitting apparatus 154. When the first black-and-white camera or the second black-and-white camera works, the infrared emitting apparatus 154 is configured to selectively emit infrared light, to play a role of supplementing light when the ambient light is insufficient, for example, when shooting at night, so that the first black-and-white images or the second black-and-white images available for identifying the face and eyes of the user can also be shot even under the condition of weak ambient light.

In some embodiments, the eye positioning apparatus 150 or the processing terminal or display device integrated with the eye positioning apparatus may be configured to, when the first black-and-white camera or the second black-and-white camera works, based on a received light sensing signal, for example, control the turn-on or adjust the size of the infrared emitting apparatus when the light sensing signal is detected to be lower than a given threshold. In some embodiments, the light sensing signal is received from an ambient light sensor, integrated in the processing terminal or the display device, such as an ambient light sensor 2702.

Optionally, the infrared emitting apparatus 154 is configured to emit infrared light with a wavelength greater than or equal to 1.5 microns, i.e., long-wave infrared light. Compared with short-wave infrared light, the ability of the long-wave infrared light to penetrate the skin is weak, so the long-wave infrared light is less harmful to the eyes.

The shot first black-and-white images and second black-and-white images are transmitted to the eye positioning image processor 152. Exemplarily, the eye positioning image processor is configured to have a visual identification function, such as a face identification function, and is configured to identify the face and the eyes based on at least one of the two black-and-white images and to determine eye space positions based on positions of eyes present in the two black-and-white images. In embodiments of the present disclosure, the first black-and-white camera and the second black-and-white camera are the same black-and-white camera. In other embodiments, the first black-and-white camera and the second black-and-white camera may be different black-and-white cameras. In this case, in order to determine the eye space position, the first black-and-white image and the second black-and-white image may be calibrated or corrected.

In some embodiments, at least one of the first black-and-white camera and the second black-and-white camera is a wide-angle black-and-white camera.

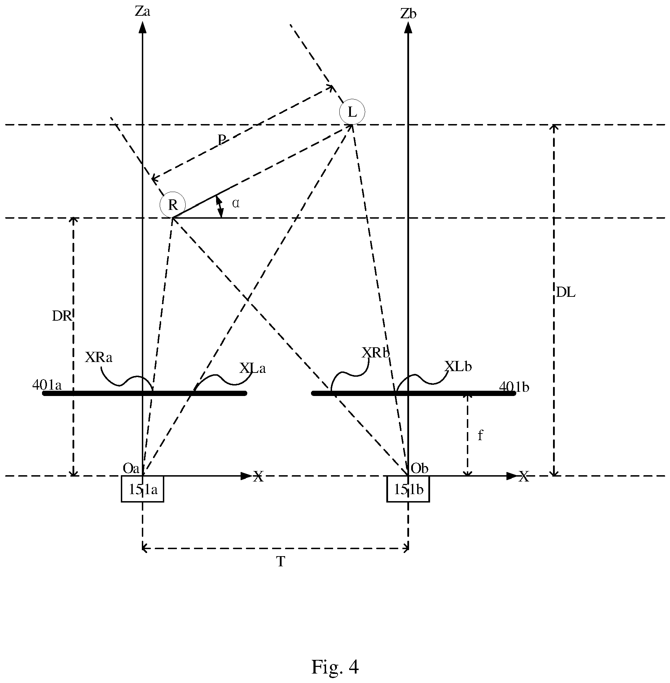

Fig. 4 schematically shows a vertical view of a geometric relationship model for determining eye space positions by using two black-and-white cameras. In an embodiment shown in Fig. 4, the first black-and-white camera and the second black-and-white camera are the same black-and-white camera, thereby having the same focal length f; an optical axis Za of the first black-and-white camera 151a is parallel to an optical axis Zb of the second black-and-white camera 151b; and a focal plane 401a of the first black-and-white camera 151a and a focal plane 401b of the second black-and-white camera 151b are in the same plane and perpendicular to the optical axes of the two black-and-white cameras. Based on the above arrangements, a connecting line of lens centers Oa and Ob of the two black-and-white cameras is parallel to the focal planes of the two black-and-white cameras. In the embodiment shown in Fig. 4, a vertical view of a geometric relationship model of an XZ plane is shown by taking a direction of the connecting line of the lens centers Oa to Ob of two black-and-white cameras as an X-axis direction and a direction of the optical axes of the two black-and-white cameras as a Z-axis direction.

In the embodiment shown in Fig. 4, the lens center Oa of the first black-and-white camera 151a is taken as an origin, and the lens center Ob of the second black-and-white camera 151b is taken as an origin. R and L respectively represent a right eye and a left eye of the user; XRa and XRb respectively represent X-axis coordinates of imaging of the right eye R of the user in the focal planes 401a and 401b of the two black-and-white cameras; and XLa and XLb respectively represent X-axis coordinates of imaging of the left eye L of the user in the focal planes 401a and 401b of the two black-and-white cameras. In addition, a distance T between the two black-and-white cameras and the focal lengths f of the two cameras are also known. According to a geometric relationship of similar triangles, distances DR and DL between the right eye R and the left eye L and the planes, in which the two black-and-white cameras set as above are, may be respectively solved as follows:

$$DR = \frac{T \cdot f}{XRb - XRa}$$

$$DL = \frac{T \cdot f}{XLb - XLa}$$

In addition, a tilt angle α formed by a connecting line between both eyes of the user and the planes, in which the two black-and-white cameras set as above are, and a distance or a pupil distance P between both eyes of the user may be respectively solved as follows:

$$\alpha = \arctan \left( \frac{DL - DR}{\frac{XLb \cdot DL - XRa \cdot DR}{f} + T} \right)$$

$$P = \frac{DL - DR}{\sin \alpha}$$

In the embodiment shown in Fig. 4, the connecting line between both eyes of the user, i.e., the face of the user, and the planes, in which the two black-and-white cameras set as above are, are tilted to each other, and the tilt angle is α; when the face of the user is parallel to the planes, in which the two black-and-white cameras set as above are, i.e., when the user looks at the two black-and-white cameras head-on, the tilt angle α is zero.

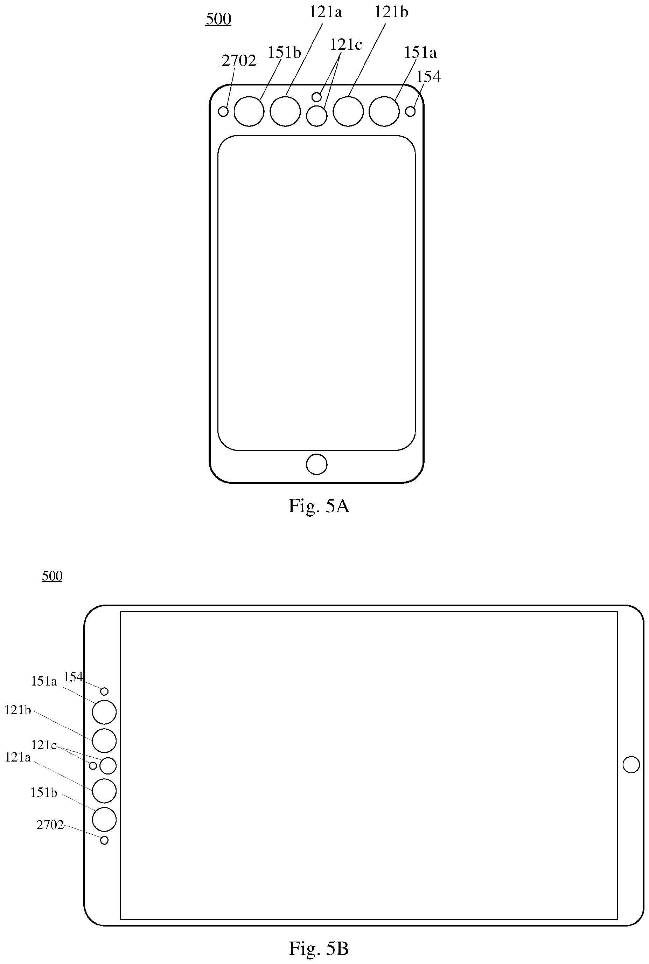

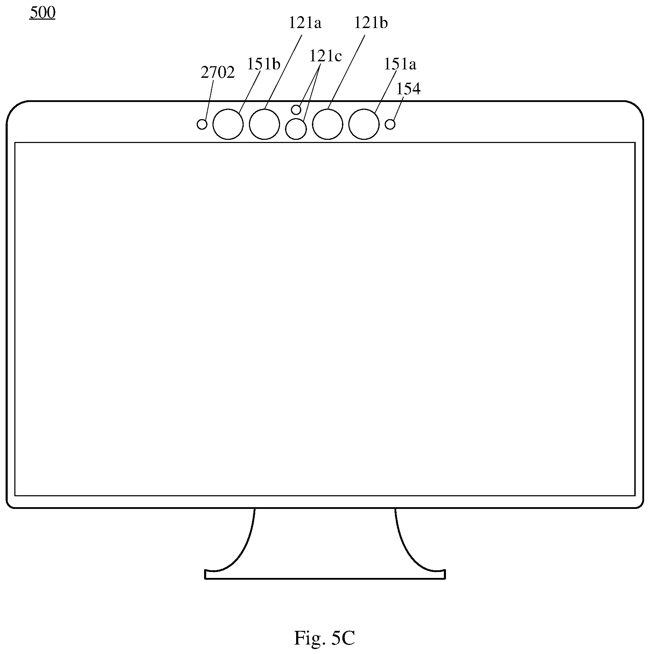

As described above, in some embodiments herein, the 3D display device 100 may be a computer or an intelligent terminal, such as a mobile terminal. However, conceivably, in some embodiments, the 3D display device 100 may also be a non-smart display terminal, such as a non-smart 3D TV. Figs. 5A, 5B and 5C show schematic diagrams of a 3D display device 500, which is respectively configured as a smart phone, a tablet personal computer (PC) and a non-smart display, and has a multi-viewpoint 3D display screen 510 and a front-mounted 3D shooting apparatus which is integrated with an eye positioning apparatus. In embodiments shown in Figs. 5A to 5C, the 3D shooting apparatus 120 comprising two color cameras 121a and 121b and the DOF camera 121c and the integrated eye positioning apparatus 150 comprising two black-and-white cameras 151a and 151b are arranged in the same plane as the multi-viewpoint 3D display screen 510 of the 3D display device 500. Therefore, in the embodiment shown in Fig. 4, the distances DR and DL between the right eye R and left eye L of the user and the planes, in which the two black-and-white cameras set as above are, are distances between the right eye R and left eye L of the user and the multi-viewpoint 3D display screen; and the tilt angle α formed by the face of the user and the planes, in which the two black-and-white cameras set as above are, is a tilt angle formed between the face of the user and the multi-viewpoint 3D display screen.

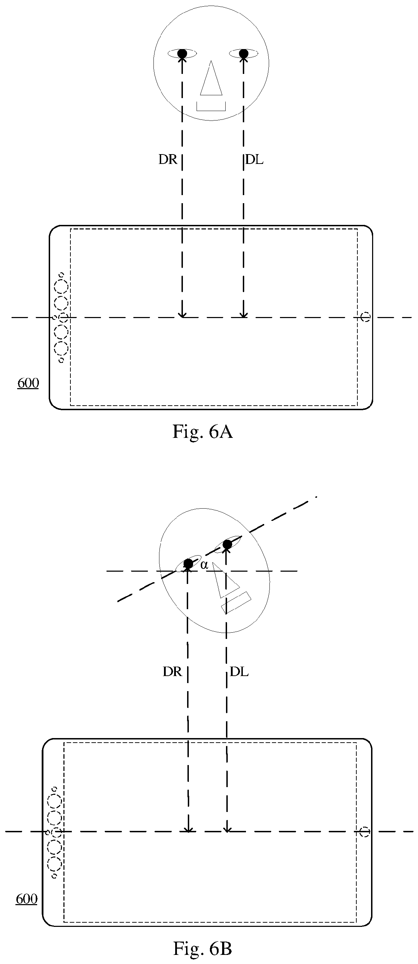

Referring to Fig. 6A, a schematic diagram of the user looking at a multi-viewpoint 3D display screen of a 3D display device 600 squarely or head-on is shown, i.e., a plane, in which the face of the user is, and a plane, in which the display screen is, are parallel to each other; the distances DR and DL between both eyes of the user and the display screen are the same; and the tilt angle α is zero.

Referring to Fig. 6B, a schematic diagram of the face of the user tilts relative to the multi-viewpoint 3D display screen of the 3D display device 600 is shown, i.e., the plane, in which the face of the user is, and the plane, in which the display screen is, are not parallel to each other; the distances DR and DL between both eyes of the user and the display screen are different; and the tilt angle α is not zero.

In some embodiments, the eye positioning data interface 153 is configured to transmit the tilt angle or parallelism of both eyes of the user relative to the eye positioning apparatus 150 or the multi-viewpoint 3D display screen 110. This may make for more accurately presenting the 3D images, which will be described hereinafter.

For example, the eye space position information DR, DL, α and P obtained as an example above is transmitted to the 3D processing apparatus 130 through the eye positioning data interface 153. The 3D processing apparatus 130, based on the received eye space position information, determines viewpoints, at which both eyes of the user are located and which are provided by the multi-viewpoint 3D display screen 110, i.e., predetermined viewpoints.

For example, the eye space position information DR, DL, α and P obtained as an example above may also be directly transmitted to the processor 101 of the 3D display device 100; and the 3D processing apparatus 130 receives/reads the eye space position information from the processor 101 through the eye positioning data interface 153.

In some embodiments, the first black-and-white camera 151a is configured to shoot a first black-and-white image sequence, which comprises a plurality of first black-and-white images arranged in time sequence; and the second black-and-white camera 151b is configured to shoot a second black-and-white image sequence, which comprises a plurality of second black-and-white images arranged in time sequence.

In some embodiments, the eye positioning image processor 152 comprises a synchronizer 155, configured to determine time-synchronized first black-and-white images and second black-and-white images in the first black-and-white image sequence and the second black-and-white image sequence. The first black-and-white images and the second black-and-white images, which are determined to be time-synchronized, are used for identification of the eyes and determination of the eye space positions.

In some embodiments, the eye positioning image processor 152 comprises a buffer 156 and a comparer 157. The buffer 156 is configured to buffer a plurality of first black-and-white images and second black-and-white images, respectively arranged in time sequence, in the first black-and-white image sequence and the second black-and-white image sequence. The comparer 157 is configured to compare a plurality of first black-and-white images and second black-and-white images, shot in time sequence, in the first black-and-white image sequence and the second black-and-white image sequence. By comparison, for example, it may be judged whether the eye space positions are changed or whether the eyes are still in a viewing range.

In some embodiments, the eye positioning image processor 152 further comprises a determiner (not shown), wherein when the comparer does not identify the presence of eyes in a current first black-and-white image and a current second black-and-white image in the first black-and-white image sequence and the second black-and-white image sequence through comparison and identifies the presence of eyes in a previous or subsequent first black-and-white image and second black-and-white image, the determiner is configured to take eye space positions, determined based on the previous or subsequent first black-and-white image and second black-and-white image, as current eye space positions. This is a case, for example, when the user turns his head briefly. In this case, the face and eyes of the user may not be identified for a short time.

Exemplarily, several first black-and-white images and second black-and-white images in the first black-and-white image sequence and second black-and-white image sequence are stored in a buffer section of the buffer 156. In some cases, the face and eyes cannot be identified from the buffered current first black-and-white image and second black-and-white image; but the face and eyes may be identified from the buffered previous or subsequent first black-and-white image and second black-and-white image. In this case, eye space position information, determined based on a first black-and-white image and second black-and-white image subsequent to, i.e., shot later after the current first black-and-white image and second black-and-white image, is taken as current eye space position information; and eye space position information, determined based on a first black-and-white image and second black-and-white image previous to, i.e., shot earlier before the current first black-and-white image and second black-and-white image, is taken as the current eye space position information. In addition, the eye space position information determined based on the above previous and subsequent first black-and-white images and second black-and-white images available for identifying the face and the eyes may be averaged, data-fitted, interpolated or processed by other methods; and the obtained results may be taken as the current eye space position information.

In some embodiments, the first black-and-white camera and the second black-and-white camera are configured to shoot the first black-and-white image sequence and the second black-and-white image sequence at a frequency of 24 fps or more. Exemplarily, the sequences are shot at a frequency of 30 fps. Exemplarily, the sequences are shot at a frequency of 60 fps.

In some embodiments, the first black-and-white camera and the second black-and-white camera are configured to shoot at the same frequency as a refresh frequency of the display screen of the 3D display device.

As described above, the 3D display device provided by embodiments of the present disclosure may be a 3D display device containing a processor. In some embodiments, the 3D display device may be configured as a smart cell phone, a tablet PC, a smart TV, a wearable device, a vehicle-mounted device, a notebook computer, an ultra-mobile personal computer (UMPC), a netbook, a personal digital assistant (PDA) and the like.

Exemplarily, Fig. 2 shows a structural schematic diagram of hardware of a 3D display device 200 implemented as a mobile terminal, such as a tablet PC or a smart cell phone. The 3D display device 200 may comprise a processor 201, an external memory interface 202, an (internal) memory 203, a USB interface 204, a charging management module 205, a power management module 206, a battery 207, a mobile communication module 281, a wireless communication module 283, antennas 282 and 284, an audio module 212, a loudspeaker 213, a receiver 233, a microphone 215, an earphone interface 216, a button 217, a motor 218, an indicator 219, an SIM card interface 260, a multi-viewpoint 3D display screen 210, a 3D processing apparatus 230, a signal interface 240, a 3D shooting apparatus 220, a sensor module 230 and the like. The 3D shooting apparatus 220 may comprise a camera assembly 221, a 3D image output interface 225 and an eye positioning apparatus 250. The sensor module 270 may comprise a proximity light sensor 2701, an ambient light sensor 2702, a pressure sensor 2703, an air pressure sensor 2704, a magnetic sensor 2705, a gravity sensor 2706, a gyro sensor 2707, an acceleration sensor 2708, a distance sensor 2709, a temperature sensor 2710, a fingerprint sensor 2711, a touch sensor 2712, a bone conduction sensor 2713 and the like.

Understandably, the schematic structures of embodiments of the present disclosure do not constitute a limitation on the 3D display device 200. In other embodiments of the present disclosure, the 3D display device 200 may comprise more or fewer components than shown in diagrams, or combine some components, or split some components, or use different component arrangements. The components shown in the diagrams may be implemented by hardware, software or a combination of software and hardware.

The processor 201 may comprise one or more processing units, for example, the processor 201 may comprise an application processor (AP), a modem processor, a baseband processor, a register 222, a GPU 223, an image signal processor (ISP), a controller, a memory, a video codec 224, a digital signal processor (DSP), a baseband processor, a neural network processor (NPU) or a combination thereof. Different processing units may be independent elements, and may also be integrated in one or more processors.

The processor 201 may further be provided with a cache, configured to store instructions or data just used or recycled by the processor 201. When the processor 201 intends to reuse the instructions or data, the instructions or data can be directly called from the memory.

In some embodiments, the processor 201 may comprise one or more interfaces. Interfaces may comprise an integrated circuit (I2C) interface, an integrated circuit built-in audio (I2S) interface, a pulse code modulation (PCM) interface, a universal asynchronous receiver-transmitter (UART) interface, a mobile industry processor interface (MIPI), a general purpose input-output (GPIO) interface, an SIM interface, a USB interface and the like.

The I2C interface is a bidirectional synchronous serial bus, and comprises a serial data line (SDA) and a serial clock line (SCL). In some embodiments, the processor 201 may comprise multiple groups of I2C buses. The processor 201 may be in communication connection with a touch sensor 2712, a charger, a flash lamp, the 3D shooting apparatus 220 or the camera assembly 221, the eye positioning apparatus 250 and the like through different I2C bus interfaces, respectively.

Both the I2S interface and the PCM interface may be used for audio communication.

The UART interface is a universal serial data bus, used for asynchronous communication. The bus may be a bidirectional communication bus. The bus converts to-be-transmitted data between serial communication and parallel communication. In some embodiments, the UART interface is configured to connect the processor 201 with the wireless communication module 283.

In an embodiment shown in Fig. 2, the MIPI may be configured to connect the processor 201 with the multi-viewpoint 3D display screen 202. In addition, the MIPI may further be configured to connect peripheral elements, such as the camera assembly 221 and the eye positioning apparatus 250.

The GPIO interface may be configured by software. The GPIO interface may be configured as a control signal, and may also be configured as a data signal. In some embodiments, the GPIO interface may be configured to connect the processor 201 with the 3D shooting apparatus 220, the multi-viewpoint 3D display screen 110, the wireless communication module 283, the audio module 212, the sensor module 270 and the like.

The USB interface 204 is an interface compliant with USB standard specifications, and may be a Mini USB interface, a Micro USB interface, a USB Type C interface or the like. The USB interface 204 may be configured to connect with the charger to charge the 3D display device 200, and may also be used for transmitting data between the 3D display device 200 and the peripheral devices. The USB interface 204 may also be configured to connect with earphones, and play audio through the earphones.

Understandably, an interface connection relationship, among various modules, illustrated in embodiments of the present disclosure is only used for schematic illustration, without constructing structural limitation to the 3D display device 200.

A wireless communication function of the 3D display device 200 may be realized by the antennas 282 and 284, the mobile communication module 281, the wireless communication module 283, the modem processor, the baseband processor or the like.

The antennas 282 and 284 are configured to transmit and receive electromagnetic wave signals. Each antenna in the 3D display device 200 may be configured to cover a single or multiple communication frequency bands. Different antennas may further be reused, to improve a utilization rate of antennas.

The mobile communication module 281 may provide solutions for wireless communication, comprising 2G/3G/4G/5G, applied to the 3D display device 200. The mobile communication module 281 may comprise at least one filter, a switch, a power amplifier, a low noise amplifier (LNA) and the like. The mobile communication module 281 may receive electromagnetic waves through the antenna 282, filter and amplify the received electromagnetic waves, and transmit the processed electromagnetic waves to the modem processor for demodulation. The mobile communication module 281 may further amplify a signal modulated by the modem processor, and then convert the amplified signal into an electromagnetic wave through the antenna 282 for radiation. In some embodiments, at least part of functional modules of the mobile communication module 281 may be arranged in the processor 201. In some embodiments, at least part of functional modules of the mobile communication module 282 may be arranged in the same element together with at least part of modules of the processor 201.

The wireless communication module 283 may provide solutions for wireless communication, comprising a wireless local area network (WLAN), a Bluetooth (BT), a global navigation satellite system (GNSS), a frequency modulation (FM), a near field communication technology (NFC), an infrared technology (IR) and the like, applied to the 3D display device 200. The wireless module 283 may be one or more elements for integrating at least one communication processing module. The wireless communication module 283 receives an electromagnetic wave through the antenna 284, modulates and filters an electromagnetic wave signal, and transmits the processed signal to the processor 201. The wireless communication module 283 may further receive a to-be-transmitted signal from the processor 201, modulate and amplify the received signal, and convert the processed signal into an electromagnetic wave through the antenna 284 for radiation.

In some embodiments, the antenna 282 of the 3D display device 200 is coupled with the mobile communication module 281, and the antenna 284 is coupled with the wireless communication module 283, so that the 3D display device 200 may communicate with the network and other devices through wireless communication technology. The wireless communication technology may comprise at least one of global system for mobile communications (GSM), general packet radio service (GPRS), code division multiple access (CDMA), wideband code division multiple access (WCDMA), time division code division multiple access (TD-SCDMA), long term evolution (LTE), BT, GNSS, WLAN, NFC, FM and IR technologies. The GNSS may comprise at least one of a global positioning system (GPS), a global navigation satellite system (GLONASS), a Beidou satellite navigation system (BDS), a quasi-zenith satellite system (QZSS), and a satellite-based augmentation system (SBAS).

In some embodiments, the external interface configured to receive 3D video signals may comprise the USB interface 204, the mobile communication module 281, the wireless communication module 283, or a combination thereof. In addition, other possible interfaces configured to receive 3D video signals, such as the above interfaces, are conceivable.

The memory 203 may be configured to store computer-executable program codes, which comprise instructions. The processor 201 implements application of various functions and data processing of the 3D display device 200 by running the instructions stored in the memory 203. The memory 203 may comprise a program storage region and a data storage region, wherein the program storage region may store an operating system, application programs required by at least one function (such as a sound playing function and an image playing function) and the like. The data storage region may store data (such as audio data and phonebook) created during use of the 3D display device 200 and the like. In addition, the memory 203 may comprise a high-speed random access memory (RAM), and may further comprise a nonvolatile memory (NVM), such as at least one disk storage, flash memory, and universal flash storage (UFS).

The external memory interface 202 may be configured to connect with an external memory card, such as a Micro SD card, to expand storage capacity of the 3D display device 200. The external memory card communicates with the processor 201 through the external memory interface 202, to realize a data storage function.

In some embodiments, memories of the 3D display device may comprise the (internal) memory 203, an external memory card connected with the external memory interface 202, or a combination thereof. In other embodiments of the present disclosure, the signal interface may also adopt internal interface connection modes or combinations thereof different from connection modes in the above embodiments.

In embodiments of the present disclosure, the camera assembly 221 may collect images or videos in 2D or 3D, and output the collected videos through the 3D image output interface 225. The eye positioning apparatus 250 may determine eye space positions of the user. The camera assembly 221, the 3D image output interface 225 and the eye positioning apparatus 250 together form the 3D shooting apparatus 220.

In some embodiments, the 3D display device 200 realizes a display function through the video signal interface 204, the 3D processing apparatus 203, the eye positioning apparatus 250, the multi-viewpoint 3D display screen 210, and the application processor.

In some embodiments, the 3D display device 200 may comprise a GPU, for example, may be configured to process 3D video images in the processor 201, and may also be configured to process 2D video images.

In some embodiments, the 3D display device 200 further comprises a video codec 224, configured to compress or decompress digital videos.

In some embodiments, the video signal interface 240 is configured to output video frames of a 3D video signal, such as a decompressed 3D video signal, processed by the GPU or the codec 224 or both to the 3D processing apparatus 230.

In some embodiments, the GPU or the codec 224 is integrated with a format adjuster.

The multi-viewpoint 3D display screen 210 is configured to display 3D images or videos. The multi-viewpoint 3D display screen 210 comprises a display panel. The display panel may be a liquid crystal display (LCD), an organic light-emitting diode (OLED), an active matrix organic light-emitting diode or initiative matrix organic light-emitting diode (AMOLED), a flexible light-emitting diode (FLED), a Mini-LED, a Micro-LED, a Micro-OLED, a quantum dot light-emitting diode (QLED) or the like.

In some embodiments, the eye positioning apparatus 250 is in communication connection to the 3D processing apparatus 230, so that the 3D processing apparatus 230 may render the corresponding subpixels in the composite pixels (composite subpixels), based on the eye positioning data. In some embodiments, the eye positioning apparatus 250 may further be connected with the processor 201, for example, be in by-passing connection with the processor 201.

In some embodiments, the 3D image output interface 225 of the 3D shooting apparatus 220 may be in communication connection to the processor 201 or the 3D processing apparatus 230.

The 3D display device 200 may realize audio functions through the audio module 212, the loudspeaker 213, the receiver 214, the microphone 215, the earphone interface 216, the application processor and the like, such as music playing and recording. The audio module 212 is configured to convert digital audio information into analog audio signal output, and is also configured to convert analog audio input into digital audio signals. The audio module 212 may further be configured to encode and decode audio signals. In some embodiments, the audio module 212 may be arranged in the processor 201, or some functional modules of the audio module 212 may be arranged in the processor 201. The loudspeaker 213 is configured to convert audio electrical signals into sound signals. The 3D display device 200 may listen to music or hands-free conversation through the loudspeaker 213. The receiver 214, also called "telephone handset", is configured to convert audio electrical signals into sound signals. When the 3D display device 200 answers calls or receives voice messages, the 3D display device 200 may receive voice by placing the receiver 214 close to an ear. The microphone 215 is configured to convert sound signals into electrical signals. The earphone interface 216 is configured to connect with a wired earphone. The earphone interface 216 may be a USB interface, and may also be a 3.5 mm open mobile 3D display device platform (OMTP) standard interface or a cellular telecommunications industry association (CTIA) standard interface.

The button 217 comprises a power button, a volume button and the like. The button 217 may be a mechanical button. The button 217 may also be a touch button. The 3D display device 200 may receive button input, and generate button signal input related to user settings and function control of the 3D display device 200.

The motor 218 may generate a vibration alert. The motor 218 may be configured as a call vibration alert, and may also be configured as a touch vibration feedback.

The SIM card interface 260 is configured to connect with an SIM card. In some embodiments, the 3D display device 200 is an eSIM, i.e., an embedded SIM card.

The ambient light sensor 2702 is configured to sense ambient light brightness. The 3D display device 200 may adjust the brightness of the multi-viewpoint 3D display screen 210 or assist eye positioning according to the sensed ambient light brightness, for example, when the ambient light is relatively dim, the eye positioning apparatus 250 starts the infrared emitting apparatus. The ambient light sensor 2702 may also be configured to adjust white balance when a black-and-white camera shoots.

The pressure sensor 2703 is configured to sense pressure signals, and may convert the pressure signals into electrical signals. In some embodiments, the pressure sensor 2703 may be arranged on the multi-viewpoint 3D display screen 210, which falls within the scope of embodiments of the present disclosure.

The air pressure sensor 2704 is configured to measure air pressure. In some embodiments, the 3D display device 200 calculates an altitude by the air pressure value measured by the air pressure sensor 2704, and assists in positioning and navigation.

The magnetic sensor 2705 comprises a Hall sensor.

The gravity sensor 2706, as a sensor converting motion or gravity into electrical signals, is mainly configured to measure parameters, such as tilt angle, inertia force, impact and vibration.

The gyro sensor 2707 may be configured to determine a motion attitude of the 3D display device 200.

The acceleration sensor 2708 may detect acceleration of the 3D display device 200 in various directions (generally three axes).

The distance sensor 2709 may be configured to measure a distance.

The temperature sensor 2710 may be configured to detect a temperature.

The fingerprint sensor 2711 may be configured to collect fingerprints. The 3D display device 200 may utilize collected fingerprint characteristics to unlock with fingerprints, access an application lock, shoot with fingerprints, answer an incoming call with fingerprints and the like.

The touch sensor 2712 may be arranged in the multi-viewpoint 3D display screen 210; and the touch sensor 2712 and the multi-viewpoint 3D display screen 210 form a touch screen, also called a "touch panel".

The bone conduction sensor 2713 may acquire vibration signals.

The charging management module 205 is configured to receive charging input from the charger. The charger may be a wireless charger, and may also be a wired charger. In some embodiments of wired charging, the charging management module 205 may receive the charging input of the wired charger through the USB interface 204. In some embodiments of wireless charging, the charging management module 205 may receive wireless charging input through a wireless charging coil of the 3D display device 200.

The power management module 206 is configured to connect with the battery 207, the charging management module 205 and the processor 201. The power management module 206 receives input from at least one of the battery 207 and the charging management module 205, and supplies power to the processor 201, the memory 203, the external memory, the multi-viewpoint 3D display screen 210, the camera assembly 221, the wireless communication module 283 and the like. In other embodiments, the power management module 206 and the charging management module 205 may be provided in the same device.

A software system of the 3D display device 200 may adopt a hierarchical architecture, an event-driven architecture, a microkernel architecture, a micro-service architecture or a cloud architecture. In embodiments shown in the present disclosure, an Android system with the hierarchical architecture is taken as an example, to illustrate a software structure of the 3D display device 200. However, conceivably, the embodiments of the present disclosure may be implemented in different software systems, such as an operating system.

Fig. 3 is a structural schematic diagram of software of the 3D display device 200 shown in Fig. 2. The hierarchical architecture divides software into several layers. The layers communicate with each other through a software interface. In some embodiments, the Android system is divided into four layers, from top to bottom, comprising an application program layer 310, a framework layer 320, core class library and runtime 330, and a kernel layer 340.

The application program layer 310 may comprise a series of application packages. As shown in Fig. 3, the application packages may comprise application programs, such as Bluetooth, WLAN, navigation, music, camera, calendar, call, video, gallery, map and short message. The 3D video display method according to embodiments of the present disclosure, for example, may be executed in a video application.

The framework layer 320 provides an application programming interface (API) and a programming framework for application programs in the application program layer. The framework layer comprises some predefined functions. For example, in some embodiments of the present disclosure, functions or algorithms for recognizing the acquired 3D video images and algorithms for processing images may be contained in the framework layer.

As shown in Fig. 3, the framework layer 320 may comprise a resource manager, a phone manager, a content manager, a notification manager, a window manager, a view system installation package and manager and the like.

Android Runtime comprises a core library and a virtual machine. The Android Runtime is responsible for scheduling and management of an Android system.

The core library comprises two parts: one is performance functions to be called by java language, and the other is the core library of Android.

The application program layer and the framework layer run in the virtual machine. The virtual machine executes java files of the application program layer and the framework layer as binary files. The virtual machine is configured to implement functions of object life cycle management, stack management, thread management, security and exception management, garbage collection and the like.

The core class library may comprise a plurality of functional modules, such as a 3D graphics processing library (such as OpenGL ES), a surface manager, an image processing library, a media library and a graphics engine (such as SGL).

The kernel layer 340 is a layer between hardware and software. The kernel layer at least comprises a camera driver, an audio and video interface, a call interface, a Wifi interface, a sensor driver, a power manager and a GPS interface.

Here, an embodiment of 3D video transmission and display in a 3D display device is described by taking the 3D display device, as a mobile terminal, with the structures shown in Figs. 2 and 3 as an example; however, conceivably, in other embodiments, more or fewer characteristics may be included or the characteristics therein may be changed.

In some embodiments, for example, the 3D display device 200 implemented as a mobile terminal, such as a tablet PC or a smart cell phone, receives, for example, a compressed 3D video signal from a network, such as a cellular network, a WLAN or Bluetooth, for example, by means of the mobile communication module 281 and the antenna 282 or the wireless communication module 283 and the antenna 284 as external interfaces; the compressed 3D video signal, for example, is subjected to image processing of the GPU 223 as well as coding and decoding and decompression of the codec 224; and then, for example, a decompressed 3D video signal is transmitted to the 3D processing apparatus 230 through the video signal interface 240 as an internal interface, such as the MIPI or the mini-MIPI. In addition, the eye space position information of the user is acquired by the eye positioning apparatus 250. The predetermined viewpoints are determined based on the eye space position information. The 3D processing apparatus 230 correspondingly renders the subpixels of the display screen for the predetermined viewpoints, thereby realizing the 3D video playing.

In other embodiments, the 3D display device 200 reads the compressed 3D video signal stored in the (internal) memory 203, or stored in an external memory card through the external memory interface 202, and realizes 3D video playing through corresponding processing, transmission and rendering.

In some other embodiments, the 3D display device 200 receives 3D images shot by the camera assembly 221 and transmitted by the 3D image output interface 225, and realizes 3D video playing through corresponding processing, transmission and rendering.

In some embodiments, the playing of 3D images is implemented in a video application in the Android application program layer 310.

Embodiments of the present disclosure may also provide an eye positioning method, which is realized by using the eye positioning apparatus in the above embodiments.

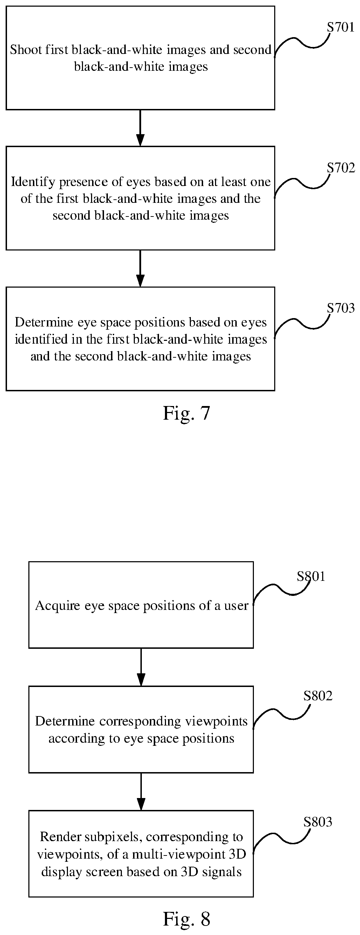

Referring to Fig. 7, in some embodiments, the eye positioning method comprises:

S701: shooting first black-and-white images and second black-and-white images;
S702: identifying the presence of eyes based on at least one of the first black-and-white images and the second black-and-white images;
S703: determining eye space positions based on the eyes identified in the first black-and-white images and the second black-and-white images.

Exemplarily, the first black-and-white images are shot at a first position; the second black-and-white images are shot at a second position; and the first position is different from the second position.

In some embodiments, the eye positioning method further comprises: transmitting eye space position information indicating the eye space positions.

In some embodiments, the eye positioning method further comprises: when the first black-and-white camera or the second black-and-white camera works, utilizing an infrared emitting apparatus to emit infrared light.

In some embodiments, the eye positioning method further comprises: shooting a first black-and-white image sequence comprising the first black-and-white images and a second black-and-white image sequence comprising the second black-and-white images respectively.

In some embodiments, the eye positioning method further comprises: determining time-synchronized first black-and-white images and second black-and-white images.

In some embodiments, the eye positioning method further comprises: buffering a plurality of first black-and-white images and second black-and-white images in the first black-and-white image sequence and the second black-and-white image sequence; comparing a plurality of previous or subsequent first black-and-white images and second black-and-white images in the first black-and-white image sequence and the second black-and-white image sequence; and taking, when the presence of eyes is not identified in a current first black-and-white image and second black-and-white image in the first black-and-white image sequence and the second black-and-white image sequence and the presence of eyes is identified in a previous or subsequent first black-and-white image and second black-and-white image through comparison, the eye space positions determined based on the previous or subsequent first black-and-white image and second black-and-white image as current eye space positions.

In some embodiments, the eye positioning method comprises: shooting a first black-and-white image sequence and a second black-and-white image sequence at a frequency of 24 fps or more.

Embodiments of the present disclosure may further provide a 3D display method.

Referring to Fig. 8, in some embodiments, the 3D display method comprises:

S801: acquiring eye space positions of the user;
S802: determining corresponding viewpoints according to the eye space positions;
S803: rendering subpixels, corresponding to the viewpoints, of a multi-viewpoint 3D display screen based on 3D signals.

In some embodiments, the 3D display method further comprises: providing the multi-viewpoint 3D display screen, which comprises a plurality of composite pixels, wherein each composite pixel of the plurality of composite pixels comprises a plurality of composite subpixels; and each composite subpixel of the plurality of composite subpixels comprises a plurality of subpixels corresponding to the plurality of viewpoints.

Exemplarily, when it is determined that each eye of the user corresponds to one viewpoint based on the eye space positions, images of two viewpoints, at which both eyes of the user are located, are generated based on video frames of 3D video signals; and the subpixels, corresponding to the two viewpoints, in the composite subpixels are rendered.

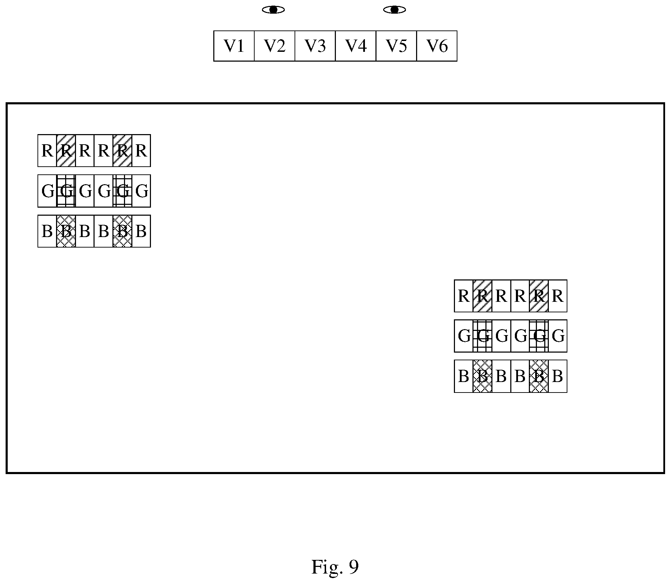

Referring to Fig. 9, in the illustrated embodiment, the right eye of the user is at a second viewpoint V2; the left eye is at a fifth viewpoint V5; images of the two viewpoints V2 and V5 are generated based on the video frames of the 3D video signals; and the subpixels, corresponding to the two viewpoints, in the composite subpixels are rendered.

In some embodiments, when the tilt angle or parallelism of both eyes of the user relative to the multi-viewpoint 3D display screen is determined based on the eye space positions, targeted or customized display images may be provided for the user, to improve viewing experience of the user.

The above eye space positions may be acquired or determined in real time, and may also be acquired or determined periodically or randomly.

The computer-readable storage medium provided by the embodiments of the present disclosure stores computer-executable instructions; and the computer-executable instructions are set to execute the eye positioning method and the 3D display method.

The computer program product provided by the embodiments of the present disclosure comprises computer programs stored on a computer-readable storage medium; the computer programs comprise program instructions; and when the program instructions are executed by a computer, the computer executes the eye positioning method and the 3D display method.

Technical solutions of embodiments of the present disclosure may be reflected in the form of a software product, which is stored in a storage medium and comprises one or more instructions for enabling computer equipment (which may be a personal computer, a server, network equipment or the like) to perform all or some steps of the method in embodiments of the present disclosure. The storage medium may be a non-transient storage medium, comprising a plurality of media capable of storing program codes, such as a U disk, a mobile hard disk, a read-only memory (ROM), a RAM, a diskette or an optical disk, and may also be a transient storage medium.

The system, the devices, the modules or the units illustrated in the above embodiments may be realized by various possible entities. A typical realizing entity is the computer or the processor thereof or other components. The computer, for example, may be the personal computer, a laptop computer, vehicle-mounted human-computer interaction equipment, the cell phone, a camera phone, an intelligent phone, the PDA, a media player, navigation equipment, E-mail equipment, a game console, the tablet personal computer, the wearable equipment, the smart television, an Internet of Things (IoT) system, smart home, an industrial computer, a singlechip system or a combination thereof. In a typical configuration, the computer may comprise one or more Central Processing Units (CPUs), an input/output interface, a network interface and a memory. The memory probably comprises a volatile memory, an RAM and/or a nonvolatile memory and other forms in a computer readable medium, such as a Read Only Memory (ROM) or a flash RAM.

The method, the programs, the system, the devices and the like in the embodiments of the present application may be executed or realized in one or more networked computers, and may also be implemented in distributed computing environments. In the embodiments of the description, in the distributed computing environments, tasks are executed by remote processing equipment connected by a communication network.

Those skilled in the art should understand that the embodiments of the description may provide the method, the system or computer program products. Therefore, the embodiments of the description may adopt forms of full-hardware embodiments, full-software embodiments or embodiments combining software and hardware aspects.

Those skilled in the art may contemplate that the functional modules/units or the controller and related method steps, illustrated in the above embodiments, may be realized in a software manner, a hardware manner and a software/hardware combination manner, and for example, may be realized in a pure computer readable program code manner, and logic programming can also be performed for part or all of the method steps to enable the controller to realize same functions by the hardware, comprising but not limited to a logic gate, a switch, a special integrated circuit, a Programmable Logic Controller (PLC) (such as the FPGA) and an embedded microcontroller.

In some embodiments of the present application, the components of the devices are described in a form of the functional modules/units. It may be contemplated that a plurality of functional modules/units are realized in one or more 'combined' functional modules/units and/or one or more software and/or hardware. It may also be contemplated that the single functional module/unit is realized by the combination of a plurality of sub-functional modules/sub-units and/or multiple software and/or hardware. The division of the functional modules/units may be only a logic function division, and in a realizing manner, the plurality of functional modules/units may be combined or may be integrated into another system. Additionally, the connection of the modules, the units, the devices, the systems and the components thereof in the text comprises direct or indirect connection, covering feasible electrical, mechanical and communication connection, especially comprising wired or wireless connection between various interfaces, comprising but not limited to a High-Definition Multimedia Interface (HDMI), thunders, the USB, the WiFi and the cellular network.

In the embodiments of the present application, the technical features, the flow charts and/or the block diagrams of the method and the programs may be applied in the corresponding devices, equipment and systems as well as the modules, the units and the components thereof. On the contrary, all the embodiments and features of the devices, the equipment, the systems as well as the modules, the units and the components thereof may be applied in the method and the programs according to the embodiments of the present application. For example, a computer program instruction may be loaded in a general-purpose computer, a special computer, an embedded processor or a processor of other programmable data processing equipment to generate a machine which has corresponding functions or features realized in one program or more programs of the flow charts and/or one block or more blocks of the block diagrams.

The method and the programs according to the embodiments of the present application may be stored in a computer readable memory or medium which can guide the computer or other programmable data processing equipment to work in a specific manner by way of the computer program instructions or programs. The embodiments of the present application also relate to the readable memory or medium which stores the method, the programs and the instructions which can implement the embodiments of the present application.

Unless clearly pointed out, actions or steps of the method and the programs recorded according to the embodiments of the present application are not necessarily executed according to a specific sequence, and an expected result may still be realized. In some implementation manners, multitasking and parallel processing are also permissible or are probably favorable.

The exemplary system and method of the present application are shown and described with reference to the above embodiments, and are only examples for executing the system and the method. Those skilled in the art may understand that when the system and/or the method is executed, various changes may be made to the embodiments of the system and the method described here, without departing from the spirit and the scope, defined in the attached claims, of the present application.

## Claims

1. An eye positioning apparatus, comprising:

   an eye positioner, comprising a first black-and-white camera configured to shoot first black-and-white images and a second black-and-white camera configured to shoot second black-and-white images;
   an eye positioning image processor, configured to identify presence of eyes based on at least one of the first black-and-white images and second black-and-white images, and determine eye space positions based on the eyes identified in the first black-and-white images and second black-and-white images.

2. The eye positioning apparatus according to claim 1, further comprising an eye positioning data interface, configured to transmit eye space position information which indicates the eye space positions.

3. The eye positioning apparatus according to claim 1, wherein the eye positioner further comprises an infrared emitting apparatus.

4. The eye positioning apparatus according to claim 3, wherein the infrared emitting apparatus is configured to emit infrared light with a wavelength greater than or equal to 1.5 microns.

5. The eye positioning apparatus according to any one of claims 1-4, wherein the first black-and-white camera and the second black-and-white camera are configured to respectively shoot a first black-and-white image sequence comprising the first black-and-white images and a second black-and-white image sequence comprising the second black-and-white images.

6. The eye positioning apparatus according to claim 5, wherein the eye positioning image processor comprises a synchronizer, configured to determine time-synchronized first black-and-white images and second black-and-white images, so as to conduct identification of eyes and determination of eye space positions.

7. The eye positioning apparatus according to claim 6, wherein the eye positioning image processor comprises:

   a buffer, configured to buffer a plurality of first black-and-white images and second black-and-white images in the first black-and-white image sequence and second black-and-white image sequence;
   a comparer, configured to compare a plurality of previous or subsequent first black-and-white images and second black-and-white images in the first black-and-white image sequence and second black-and-white image sequence;
   a determiner, wherein when the comparer does not identify presence of eyes in a current first black-and-white image and a current second black-and-white image in the first black-and-white image sequence and the second black-and-white image sequence and identifies presence of eyes in a previous or subsequent first black-and-white image and second black-and-white image through comparison, the determiner is configured to take eye space positions, determined based on the previous or subsequent first black-and-white image and second black-and-white image, as current eye space positions.

8. A 3D display device, comprising:

   a multi-viewpoint 3D display screen, comprising a plurality of subpixels corresponding to a plurality of viewpoints;
   the eye positioning apparatus according to any one of claims 1-7, configured to obtain eye space positions;
   a 3D processing apparatus, configured to determine corresponding viewpoints according to eye space positions obtained by the eye positioning apparatus, and render subpixels, corresponding to the viewpoints, of the multi-viewpoint 3D display screen based on 3D signals.

9. The 3D display device according to claim 8, wherein the multi-viewpoint 3D display screen comprises a plurality of composite pixels, each composite pixel of the plurality of composite pixels comprises a plurality of composite subpixels, and each composite subpixel of the plurality of composite subpixels comprises a plurality of subpixels corresponding to a plurality of viewpoints.

10. The 3D display device according to claim 8, wherein the 3D processing apparatus is in communication connection with the eye positioning apparatus.

11. The 3D display device according to any one of claims 8-10, further comprising:

    a 3D shooting apparatus, configured to collect 3D images;
    the 3D shooting apparatus comprises a depth-of-field (DOF) camera and at least two color cameras.

12. The 3D display device according to claim 11, wherein the eye positioning apparatus is integrated with the 3D shooting apparatus.

13. The 3D display device according to claim 12, wherein the 3D shooting apparatus is placed in front of the 3D display device.

14. An eye positioning method, comprising:

    shooting first black-and-white images and second black-and-white images;
    identifying presence of eyes based on at least one of the first black-and-white images and second black-and-white images;
    determining eye space positions based on the eyes identified in the first black-and-white images and second black-and-white images.

15. The eye positioning method according to claim 14, further comprising: transmitting eye space position information which indicates the eye space positions.

16. The eye positioning method according to claim 14, further comprising: emitting infrared light by utilizing an infrared emitting apparatus when the first black-and-white camera or the second black-and-white camera works.

17. The eye positioning method according to any one of claims 14-16, further comprising: shooting a first black-and-white image sequence comprising the first black-and-white images and a second black-and-white image sequence comprising the second black-and-white images respectively.

18. The eye positioning method according to claim 17, further comprising: determining time-synchronized first black-and-white images and second black-and-white images.

19. The eye positioning method according to claim 18, further comprising:

   buffering a plurality of first black-and-white images and second black-and-white images in the first black-and-white image sequence and second black-and-white image sequence;
   comparing a plurality of previous or subsequent first black-and-white images and second black-and-white images in the first black-and-white image sequence and the second black-and-white image sequence;
   taking, when presence of eyes is not identified in a current first black-and-white image and second black-and-white image in the first black-and-white image sequence and the second black-and-white image sequence and presence of eyes is identified in a previous or subsequent first black-and-white image and second black-and-white image through comparison, eye space positions determined based on the previous or subsequent first black-and-white image and second black-and-white image as current eye space positions.

20. A 3D display method, comprising:

   acquiring eye space positions of a user;
   determining corresponding viewpoints according to the eye space positions;
   rendering subpixels, corresponding to the viewpoints, of a multi-viewpoint 3D display screen based on 3D signals.

21. The 3D display method according to claim 20, further comprising: providing the multi-viewpoint 3D display screen, which comprises a plurality of composite pixels, wherein each composite pixel of the plurality of composite pixels comprises a plurality of composite subpixels, and each composite subpixel of the plurality of composite subpixels comprises a plurality of subpixels corresponding to a plurality of viewpoints.

22. A computer-readable storage medium, storing computer-executable instructions, wherein the computer-executable instructions are configured to execute the method of any one of claims 14-21.

23. A computer program product, comprising computer programs stored on a computer-readable storage medium, wherein the computer programs comprise program instructions, and make a computer execute the method of any one of claims 14-21 when the program instructions are executed by the computer.

i = 6

| R | R | R | R | R | R |
| G | G | G | G | G | G |
| B | B | B | B | B | B |

110

n

m

Fig. 1A

100

Processor 101

Register 122

Eye positioning apparatus 150

Signal interface 140

3D processing apparatus 130

Buffer 131

Fig. 1B

150

| Eye positioner 151 | |
| --- | --- |
| First black-and-white camera 151a | Second black-and-white camera 151b |

Eye positioning image processor 152

Fig. 1C

Fig. 2

| Application program layer | Bluetooth | WLAN | Navigation | Music | Camera | Calendar | 310 |
| | Calling | Video | Map depot | Map | Short message | ℮ ℮ | |

| Framework layer | Resource manager | Phone manager | Content manager | Notice manager | 320 |
| | Window manager | View system | Installation packet manager | ℮ ℮ | |

| Core class library | 3D graphic processing library | Surface manager | Runtime | 330 |
| | Image processing library | Media library | 2D graphics engine | ℮ ℮ | |

| Kernel layer | Camera driver | Audio-video interface | Calling interface | Wifi interface | 340 |
| | Sensor driver | Power manager | GPS interface | ℮ ℮ | |

Fig. 3

Fig. 4

500   2702   151b   121a   121c   121b   151a   154

Fig. 5A

500

151a   154
121b
121c
121a
151b
2702

Fig. 5B

500

2702  151b  121a  121c  121b  151a  154

Fig. 5C

DR DL

600

Fig. 6A

DR DL

600

Fig. 6B

Shoot first black-and-white images and second black-and-white images

S701

Identify presence of eyes based on at least one of the first black-and-white images and the second black-and-white images

S702

Determine eye space positions based on eyes identified in the first black-and-white images and the second black-and-white images

S703

Fig. 7

Acquire eye space positions of a user

S801

Determine corresponding viewpoints according to eye space positions

S802

Render subpixels, corresponding to viewpoints, of a multi-viewpoint 3D display screen based on 3D signals

S803

Fig. 8

| V1 | V2 | V3 | V4 | V5 | V6 |
|----|----|----|----|----|----|

Fig. 9

| INTERNATIONAL SEARCH REPORT | International application No. |
|---|---|
| | **PCT/CN2020/133328** |

**A. CLASSIFICATION OF SUBJECT MATTER**

H04N 13/302(2018.01)i; H04N 13/383(2018.01)i; H04N 13/257(2018.01)i; H04N 13/246(2018.01)i

According to International Patent Classification (IPC) or to both national classification and IPC

**B. FIELDS SEARCHED**

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNPAT, CNKI, WPI, EPODOC, IEEE: 图像, 黑白, 摄像头, 双, 多个, 两个, 眼, 位置, 定位, 坐标, 3D, 立体, 三维, 视点, 像素, 显示, 成像, image, black and white, camera, double, two, eye, position, coordinate, stereo, three-dimensional, viewpoint, pixel, display

**C. DOCUMENTS CONSIDERED TO BE RELEVANT**

| Category* | Citation of document, with indication, where appropriate, of the relevant passages | Relevant to claim No. |
|---|---|---|
| PX | CN 211791829 U (BEIJING IVISUAL3D TECHNOLOGY CO., LTD. et al.) 27 October 2020 (2020-10-27) claims 1-12, description paragraphs 35-183, figures 1A-6B | 1-23 |
| PX | CN 211531217 U (BEIJING IVISUAL3D TECHNOLOGY CO., LTD. et al.) 18 September 2020 (2020-09-18) description paragraphs 36-106 | 1-23 |
| X | CN 103248905 A (SHENZHEN CLOUDCUBE INFORMATION TECHNOLOGY CO., LTD.) 14 August 2013 (2013-08-14) claims 1-12, description paragraphs 40-73, figures 1-3 | 20, 21 |
| Y | CN 103248905 A (SHENZHEN CLOUDCUBE INFORMATION TECHNOLOGY CO., LTD.) 14 August 2013 (2013-08-14) claims 1-12, description paragraphs 40-73, figures 1-3 | 1-19,22,23 |
| Y | CN 101866215 A (FUDAN UNIVERSITY) 20 October 2010 (2010-10-20) description paragraphs 11, 12 | 1-19,22,23 |
| X | CN 101072366 A (SHANGHAI UNIVERSITY) 14 November 2007 (2007-11-14) description, paragraph [0026] | 20, 21 |

☑ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 February 2021** | **26 February 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2020/133328**

| C. | DOCUMENTS CONSIDERED TO BE RELEVANT | |
|---|---|---|
| Category* | Citation of document, with indication, where appropriate, of the relevant passages | Relevant to claim No. |
| A | CN 102045577 A (INFOVISION OPTOELECTRONICS (KUNSHAN) CO., LTD.) 04 May 2011 (2011-05-04)<br>entire document | 1-23 |
| A | CN 103760980 A (TCL GROUP CO., LTD.) 30 April 2014 (2014-04-30)<br>entire document | 1-23 |
| A | CN 106218409 A (CHANG'AN UNIVERSITY) 14 December 2016 (2016-12-14)<br>entire document | 1-23 |
| A | JP 5167439 B1 (PANASONIC CORP.) 21 March 2013 (2013-03-21)<br>entire document | 1-23 |
| A | KR 20130027410 A (LEE YOUNG WOO) 15 March 2013 (2013-03-15)<br>entire document | 1-23 |
| A | US 2012218258 A1 (SANYO ELECTRIC CO., LTD.) 30 August 2012 (2012-08-30)<br>entire document | 1-23 |

## INTERNATIONAL SEARCH REPORT
### Information on patent family members

International application No.

**PCT/CN2020/133328**

| Patent document cited in search report | | | Publication date (day/month/year) | Patent family member(s) | | | Publication date (day/month/year) |
|---|---|---|---|---|---|---|---|
| CN | 211791829 | U | 27 October 2020 | None | | | |
| CN | 211531217 | U | 18 September 2020 | None | | | |
| CN | 103248905 | A | 14 August 2013 | WO | 2014146619 | A1 | 25 September 2014 |
| | | | | EP | 2978217 | A1 | 27 January 2016 |
| | | | | JP | 2015528234 | A | 24 September 2015 |
| | | | | US | 2015227112 | A1 | 13 August 2015 |
| | | | | KR | 20160042808 | A | 20 April 2016 |
| CN | 101866215 | A | 20 October 2010 | None | | | |
| CN | 101072366 | A | 14 November 2007 | None | | | |
| CN | 102045577 | A | 04 May 2011 | None | | | |
| CN | 103760980 | A | 30 April 2014 | None | | | |
| CN | 106218409 | A | 14 December 2016 | None | | | |
| JP | 5167439 | B1 | 21 March 2013 | US | 2013208099 | A1 | 15 August 2013 |
| | | | | JP | WO2013121468 | A1 | 11 May 2015 |
| KR | 20130027410 | A | 15 March 2013 | None | | | |
| US | 2012218258 | A1 | 30 August 2012 | JP | 2012182569 | A | 20 September 2012 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2019112312064